# EUROPÄISCHE PATENTSCHRIFT

(11) **EP 3 560 865 B1**
(45) Veröffentlichungstag und Bekanntmachung des Hinweises auf die Patenterteilung: **13.09.2023**
(21) Anmeldenummer: 19171473.2
(22) Anmeldetag: 26.04.2019
(51) Int. Cl.: B65G 65/48, F24B 13/04, A01F 25/20, C10J 3/50

(54) **AUSTRAGUNGSVORRICHTUNG FÜR KLEINSTÜCKIGES SCHÜTTGUT UND VERBRENNUNGSEINRICHTUNG MIT SOLCH EINER AUSTRAGUNGSEINRICHTUNG**
DISCHARGE DEVICE FOR SMALL SIZED BULK MATERIAL AND COMBUSTION DEVICE WITH SUCH A DISCHARGE DEVICE
DISPOSITIF DE DISTRIBUTION POUR PRODUITS EN VRAC CONDITIONNÉ À LA PIÈCE ET DISPOSITIF DE COMBUSTION DOTÉ D'UN TEL DISPOSITIF DE DISTRIBUTION

(30) Priorität: 26.04.2018 EP 18169576
(43) Veröffentlichungstag der Anmeldung: 30.10.2019
(73) Patentinhaber: Fröling Heizkessel- und Behälterbau, Gesellschaft m.b.H, 4710 Grieskirchen (AT)
(72) Erfinder: Hutterer, Ernst, 4710 Grieskirchen (AT)
(74) Vertreter: Jell, Friedrich

(56) Entgegenhaltungen:
- EP-A2- 2 587 150
- EP-B1- 2 385 006
- DE-A1- 1 801 505
- DE-A1- 3 410 546

## Beschreibung

Die Erfindung betrifft eine Austragungsvorrichtung für kleinstückiges Schüttgut, insbesondere für Hackschnitzel oder Pellets, mit einem um eine Antriebsachse drehbaren Innenteil, mit am Innenteil über jeweils ein Gelenk verbundenen Gelenkarmen, die um eine Gelenkachse des Gelenks gegen eine Federkraft in eine zusammengeklappte Position verschwenkbar sind, und mit einer zwischen den beiden Gelenkarmen wirksamen mechanischen Zwangskopplung zur Synchronisation der Schwenkbewegung der Gelenkarme, wobei die mechanische Zwangskopplung ein Hebelarmgestänge mit einem Übertragungselement und mit zwei Stellarmen aufweist, wobei die Stellarme sowohl mit dem Übertragungselement als auch jeweils beabstandet vom Gelenk mit jeweils einem Gelenkarm beweglich verbunden sind.

Gelenkarme einer Austragungsvorrichtung mechanisch zwangszukoppeln, um damit einen Vorratsbunker an Hackschnitzeln symmetrisch zu entleeren, ist aus dem Stand der Technik bekannt.

Beispielsweise wird solch eine Zwangskopplung bei einer 2004 veröffentlichten Austragungsvorrichtung zu einem Hackgutkessel USV der Firma "KWB - Kraft und Wärme aus Biomasse GmbH" geschaffen, indem an beiden Gelenkarmen eine Gliederkette befestigt ist, welche diese damit bewegungskoppelt. Dieses Bodenrührwerk von KWB ist auch unter der Bezeichnung "KWB Fördersystem m" bekannt.

Alternativ zu einer Gliederkette schlägt die EP 2385006 B1 vor, ein Hebelarmgestänge mit einem drehbar gelagerten Stellring und zwei daran schwenkbar angelenkten Stellarmen zu realisieren, welche Stellarme mit den Gelenkarmen drehbar verbunden sind.

All diesen Lösungen gemein ist der vergleichsweise hohe konstruktive Aufwand. Zudem sind die aus dem Stand der Technik bekannten mechanischen Zwangskopplungen vergleichsweise anfällig gegenüber Verschmutzungen - beispielsweise im Bereich der Gliederkette oder den Drehgelenken -, sodass diese nur bedingt in verstaubten Umgebungen einsetzbar sind bzw. entsprechend häufig zu warten sind. Die Standfestigkeit derartiger Austragungsvorrichtung für kleinstückiges Schüttgut ist somit nachteilig.

Die Erfindung hat sich daher die Aufgabe gestellt, eine Austragungsvorrichtung der eingangs geschilderten Art in ihrer Standfestigkeit durch Vereinfachung der Konstruktion in der mechanischen Zwangskopplung zu verbessern.

Die Erfindung löst die gestellte Aufgabe durch die Merkmale des Anspruchs 1.

Weist das Übertragungselement einen um die Antriebsachse kippbaren Kipphebel mit zwei Kipphebelseiten auf, wobei die Stellarme mit der jeweiligen Kipphebelseite des Kipphebels drehbar und mit den Gelenkarmen schwenkbar verbunden sind, kann auf einen drehbaren Stellring verzichtet werden, welcher die Beweglichkeit der Stellarme durch die schwenkbare Anlenkung einschränkt. Die Austragung des Stückguts kann daher selbst bei einer Ausgangslage mit sehr ungleichmäßig verteiltem Schüttgut sicher erfolgen - und zudem dazu führen, dass sich die Verteilung an Schüttgut schneller vergleichmäßigt, als dies durch den Stand der Technik realisierbar ist. Außerdem ist ein Kipphebel konstruktiv vergleichsweise einfach im Bereich des Innenteils vorzusehen - auch ist er durch seine von der Kippachse auskragenden Kippseiten robust gegenüber Verschmutzungen. Anhand der erfindungsgemäßen Konstruktion ist daher eine besonders hohe Standfestigkeit in der Austragung an kleinstückigem Schüttgut sicherstellbar.

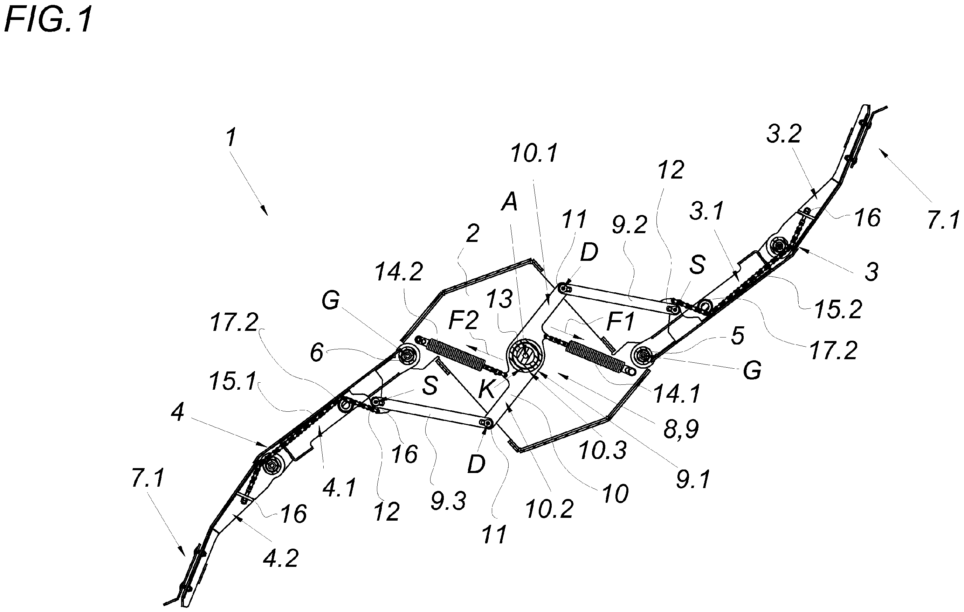

Vorzugsweise erstrecken sich die zwei Kipphebelseiten von der Antriebsachse weg, wie dies in Fig. 1 zu erkennen ist.

Die Konstruktion der Austragungsvorrichtung wird weiter vereinfacht, weil der Kipphebel an der Antriebswelle, über ein Kipplager, mit der Antriebsachse zum Drehen des Innenteils kippbar gelagert ist. Der Kipphebel ist dadurch an der Antriebswelle direkt gelagert bzw. auf der Antriebswelle gelagert.

Die Sicherstellung gleicher Belastungen der Gelenkarme ist möglich, wenn die beiden Kipphebelseiten des Kipphebels gleich lang ausgebildet sind - womit keine Übersetzung in der Kraftkopplung zu erwarten ist. Vorzugsweise sind die Kipphebelseiten gerade verlaufend.

Greift an den Kipphebel mindestens eine Feder an, welche die Federkraft erzeugt, gegen die die Gelenkarme in die zusammengeklappte Position verschwenkbar sind, kann auf elegante Weise eine zentrale Stelle für die Einleitung der Federkraft gefunden werden. Zudem ist dieser Angriffspunkt vergleichsweise leicht gegenüber funktionsgefährdender Verschmutzung zu schützen. Die Standfestigkeit der Austragungsvorrichtung ist dadurch weiter erhöhbar. Besonders kann sich hierbei eine Schraubenzugfeder als Feder auszeichnen.

Vorteilhafte Verhältnisse zum Austragen von Schüttgut ergibt sich, wenn die Feder eine lineare Federkennlinie aufweist.

Symmetrische Belastungen am Kipphebel können sichergestellt werden, wenn an beiden Kipphebelseiten je eine Feder angreift, deren Federkräfte entgegengesetzt auf den Kipphebel wirken. Zudem kann diese doppelseitige Federbelastung des Kipphebels die Einstellung der auf die Gelenkarmen wirkenden Federkraft vergleichmäßigen.

Die Konstruktion des Hebelarmgestänges kann vereinfacht werden, wenn die Stellarme gerade verlaufen.

Die Reichweite der Gelenkarme ist erhöhbar, wenn die Gelenkarmen jeweils einen Innenarmteil und einen an diesen schwenkbar angelenkten Außenarmteil aufweisen.

Der Außenarmteil kann mit der Bewegung des Innenarmteils - konstruktiv einfach realisiert - gekoppelt werden, wenn je an einem Stellarm und an einem Außenarmteil ein biegeweiches Zugelement angreift. Als biegeweiches Zugelement eignet sich beispielsweise ein Seil, Riemen oder ganz besonders eine Gliederkette, um beispielsweise Schmutzbelastungen standzuhalten.

Wird das biegeweiche Zugelement am Innenarmteil umgelenkt, wofür der Innenarmteil eine Umlenkeinrichtung aufweist, ist es möglich, dessen Erstreckung im Bereich der Gelenkarme zu halten. Mit einer verminderten Gefahr an Verschmutzungen am biegeweichen Zugelement und damit erhöhter Standfestigkeit ist demnach zu rechnen. Die Umlenkeinrichtung kann hierfür beispielsweise eine Rolle, einen Stift, ein Zahnrad etc. aufweisen.

Vergrößert sich der erste Innenwinkel α zwischen dem Kipphebel und dem jeweiligen Stellarm von der zusammengeklappten Position der Gelenkarme in die aufgeklappte Position der Gelenkarme, kann eine vorteilhafte Krafteinleitung auf die Gelenkarme ermöglicht werden. Insbesondere, wenn sich dabei der erste Innenwinkel α von spitz auf stumpf verändert. Durch den kleineren insbesondere spitzen, Winkel ergibt sich nämlich eine geringe Krafteinleitung auf die Gelenkarme, welche erst mit sich vergrößernden Winkel zunimmt. Damit kann jene, bei herkömmlichen Systemen bekannte hohe Kraft auf die Gelenkarme am Beginn der Entleerung von Schüttgut vermieden werden - was Reibungskräfte reduziert und damit den Verschleiß an der Austragungsvorrichtung verringert. Zudem erfordert dadurch die erfindungsgemäße Austragung einen verringerten Einsatz von Energie. Entfernen sich die Gelenkarme von der zusammengeklappten Position, erhöht sich auch deren Kraftbelastung auf Schüttgut etc., was dessen Austragung besonders gut sicherstellen kann.

Diese vorstehend genannte Krafteinleitung auf die Gelenkarme kann durch den erfindungsgemäßen Hebelmechanismus verstärkt werden, wenn sich der zweite Innenwinkel β zwischen dem jeweiligen Stellarm und den daran anschließenden Gelenkarm von der zusammengeklappten Position der Gelenkarme in die aufgeklappte Position der Gelenkarme verringert. Insbesondere dann, wenn sich dabei der zweite Innenwinkel β von stumpf auf spitz verändert.

Ein hoher Grad der Verstärkung ist erreichbar, wenn die Stellarme mit den jeweiligen Gelenkarmen, vom betreffenden Gelenk aus gesehen, in der ersten Hälfte schwenkbar verbunden sind.

Insbesondere kann sich die erfindungsgemäße Austragungseinrichtung zur Beschickung einer Verbrennungseinrichtung mit Schüttgut als Verbrennungsgut eignen. Als Verbrennungsgut können etwa Hackschnitzel, Pellets und/oder andere Holzwerkstoffe dienen.

In den Figuren ist beispielsweise der Erfindungsgegenstand anhand einer Ausführungsvariante näher dargestellt. Es zeigen
- Fig. 1: eine Draufsicht auf eine Austragungsvorrichtung mit ausgeschwenkten Gelenkarmen,
- Fig. 2: eine Draufsicht auf das nach Fig. 1 dargestellte Austragungsvorrichtung mit eingeschwenkten Gelenkarmen und
- Fig. 3: eine überlagerte Ansicht auf die Zwangskopplung in verschiedenen Positionen der Gelenkarme.

Nach Fig. 1 wird beispielsweise eine Austragungsvorrichtung 1 für ein nicht dargestelltes kleinstückiges Schüttgut, beispielsweise für Hackschnitzel, Pellets etc., dargestellt. Solch eine Austragungsvorrichtung 1 kann beispielsweise zur Beschickung einer Verbrennungsanlage dienen. Die Austragungsvorrichtung 1 weist ein Innenteil 2 auf, das um eine Antriebsachse A einer Antriebswelle 13 eines nicht dargestellten elektrischen Antriebs oder Getriebes drehbar ist. Am Innenteil 2 sind zwei Gelenkarme 3, 4 angelenkt - und zwar sind diese über jeweils ein Gelenk 5, 6 mit dem Innenteil 2 verbunden.

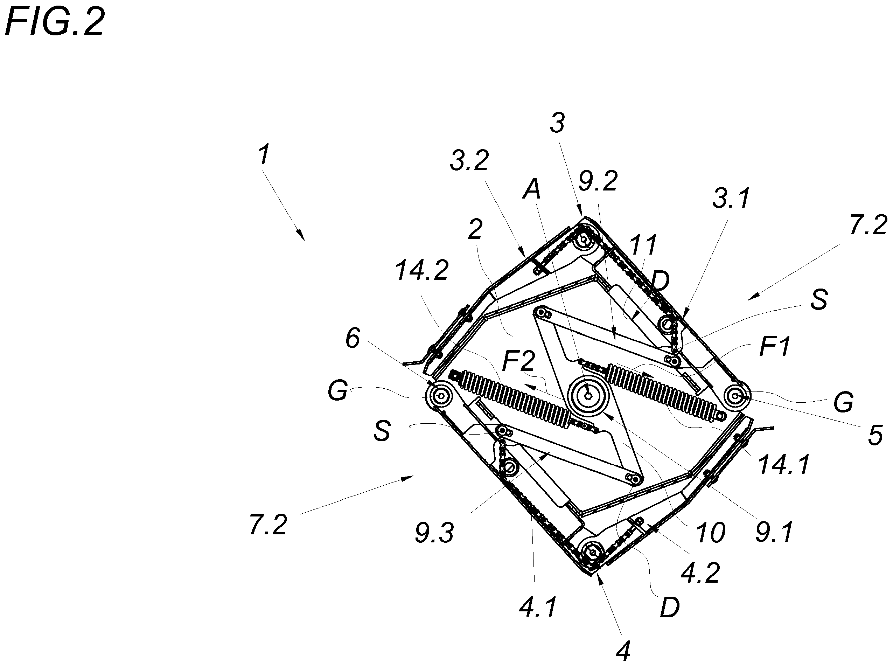

Damit sind diese Gelenkarme 3, 4 jeweils um die Gelenkachse G des betreffenden Gelenks 5, 6 gegen eine Federkraft F von einer nach Fig. 1 dargestellten aufgeklappten Position 7.1 in eine nach Fig. 2 dargestellte zusammengeklappte Position 7.2 verschwenkbar.

Für einen gleichmäßigen Austrag an Hackschnitzel usw. sorgt eine mechanische Zwangskopplung 8, welche die Schwenkbewegung der Gelenkarme 3, 4 gegenüber dem Innenteil 2 synchronisiert. Die mechanische Zwangskopplung 8 wird mit einem Hebelarmgestänge 9 erreicht, das ein Übertragungselement 9.1 und zwei Stellarme 9.2, 9.3 aufweist. Diese beiden Stellarme 9.2, 9.3 sind mit dem Übertragungselement 9.1 beweglich verbunden. Jeder Stellarm 9.2, 9.3 ist mit einem der Gelenkarme 3, 4 beweglich verbunden - und zwar an einer Lagerstelle, beabstandet vom Gelenk 5, 6 des jeweiligen Gelenkarms 3, 4. Zudem verlaufen die Stellarme 9.2, 9.3 gerade, was wiederum Wartung, Montage etc. der Austragungsvorrichtung 1 erleichtert.

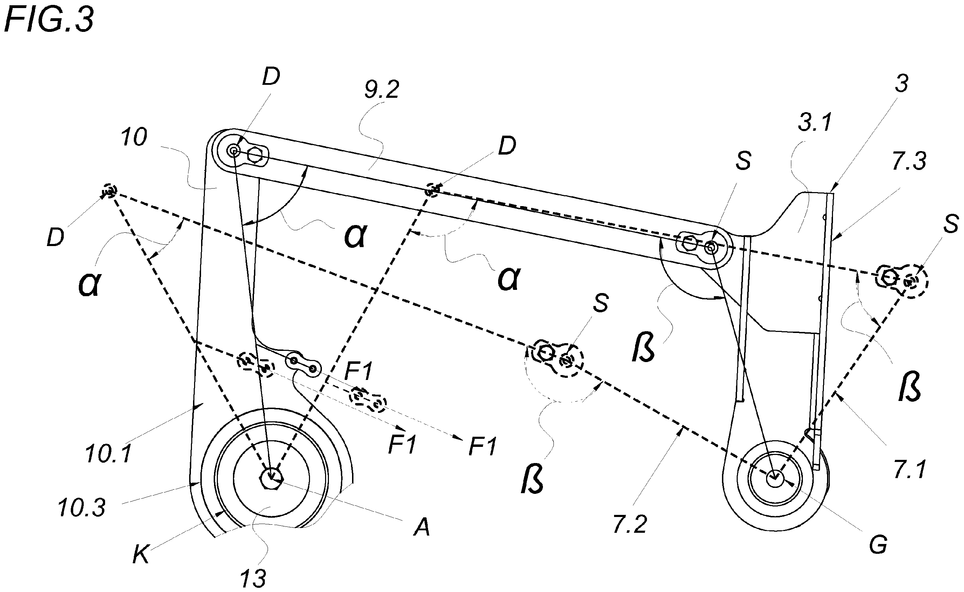

Erfindungsgemäß weist nun das Übertragungselement 9.1 einen um die Antriebsachse A kippbaren Kipphebel 10 auf, womit eine hohe mechanische Stabilität erreicht wird. Nach Fig. 1 ist dieser Kipphebel 10 besonders gut zu erkennen. So ist zu erkennen, dass der zweiarmige Kipphebel 10 zwei gerade Kipphebelseiten 10.1, 10.2 aufweist. Die Kipphebelseiten 10.1, 10.2 weisen zwischen sich eine Lagerbohrung 10.3 am Kipphebel 10 auf, wie auch in Fig. 3 zu erkennen. Damit erstecken sich die zwei Kipphebelseiten 10.1, 10.2 von der kippbaren Lagerung des Kipphebels 10 weg bzw. damit auch von der Antriebsachse A weg, wie dies in Fig. 1 zu erkennen ist.

Mit diesem Kipphebel 10 sind die Stellarme 9.2, 9.3 jeweils um eine Drehachse D eines Drehgelenks 11 drehbar verbunden, und zwar an den Enden der jeweiligen Kipphebelseiten 10.1, 10.2 des Kipphebels 10.

Am anderen Ende sind die Stellarme 9.2, 9.3 mit den jeweiligen Gelenkarmen 3, 4 um eine Schwenkachse S eines Schwenkgelenks 12 schwenkbar verbunden. Die Drehachsen D und Schwenkachsen S verlaufen zur Antriebsachse A parallel. Diese Faktoren führen zu vereinfachten und gegenüber Verschmutzung standfesten Konstruktionsverhältnissen.

Dieser Vorteil ist besonders ausgeprägt, indem der Kipphebel 10 an der Antriebswelle 13 mit der Antriebsachse A zum Drehen des Innenteils 2 kippbar gelagert ist - wie dies in Fig. 1 erkannt werden kann. Zwischen Antriebswelle 13 und Kipphebel 10 befindet sich ein Kipplager K, das beispielsweise von einem Gleitlager ausgebildet wird. Ein Lagerteil des Kipplagers K ist an der Lagerbohrung 10.3 des Kipphebels 10 befestigt - das andere Lagerteil ist an der Antriebswelle 13 befestigt.

Außerdem sind die beiden Kipphebelseiten 10.1, 10.2 des Kipphebels 10 gleich lang ausgebildet, um eine übersetzungsfreie Kopplung zwischen den Gelenkarmen 3, 4 für eine gleichmäßige Austragung sicherzustellen.

Die Federbelastung auf die Gelenkarme 3, 4 geht auf zwei Federn 14.1, 14.2 - nämlich im Ausführungsbeispiel Schraubenzugfedern - zurück, welche am Kipphebel 10 angreifen und damit diese mit den Federkräften F1, F2 belasten, gegen welche die Gelenkarme 3, 4 in die zusammengeklappte Position 7.2 verschwenkbar sind. Hierzu greifen die beiden Federn 14.1, 14.2 an beide Kipphebelseiten 10.1, 10.2 an, wobei die Federn 14.1, 14.2 auf den Kipphebel 10 entgegengesetzt wirken und sich damit hinsichtlich ihrer Federkraft ergänzen. Alternativ kann auch eine Druckfeder verwendet werden, was nicht dargestellt ist.

Die Reichweite der Gelenkarme 3, 4 wird durch deren Zweiteiligkeit erhöht. Hierzu weist jeder Gelenkarm 3, 4 einen Innenarmteil 3.1, 4.1 und einen an diesen schwenkbar angelenkten Außenarmteil 3.2, 4.2 auf.

An je einem Stellarm 9.2, 9.3 und an je einem Außenarmteil 3.2, 4.2 gereift ein biegeweiches Zugelement 15.1, 15.2, nämlich eine Gliederkette, an. Hierzu befindet sich an den Stellarmen 9.2, 9.3 und an den Außenarmteilen 3.2, 4.2 Befestigungspunkte 16, über die auch das jeweilige Zugelement gespannt werden kann. Der Außenarmteil 3.2, 4.2 ist sohin mit dem jeweiligen Innenarmteil 3.1, 4.1 in der Bewegung gekoppelt, was dazu führt, dass auch dieser Teil des Gelenkarms 3, 4 gegen die Federkraft F1, F2 in eine zusammengeklappte Position 7.2 verschwenkbar sind.

Das biegeweiche Zugelement 15.1, 15.2 ist im Bereich des jeweiligen Gelenkarms 3, 4 geführt. Dies unter Verwendung einer Umlenkeinrichtung 17.1, 17.2 am Innenarmteil 3.1, 4.1, welche Umlenkeinrichtung 17.1, 17.2 als Rolle ausgeführt ist. Das biegeweiche Zugelement 15.1, 15.2 ist so gegenüber Verschmutzungen geschützt geführt - was die Standfestigkeit der Austragungsvorrichtung 1 erhöht.

Nach Fig. 3 sind verschiedene Winkellagen der Zwangskopplung 8 überlagert dargestellt. So sind beide Endposition, nämlich die aufgeklappte Position 7.1 und die zusammengeklappte Position 7.2 des Gelenkarms 3 dargestellt, sowie die mittlere Position 7.3 des Gelenkarms 3 dargestellt.

Wie der Fig. 3 - stellvertretend für beide Gelenkarme 3, 4 - zu entnehmen, verändert sich der erste Innenwinkel α zwischen dem Kipphebel 10 und dem Stellarm 9.2 von spitz in der zusammengeklappten Position 7.2 des Gelenkarms 3 in stumpf in der aufgeklappten Position 7.1 des Gelenkarms 3. Unter Beaufschlagung des Kipphebels 10 mit einer linearen Federkraft einer Schraubenzugfeder, die in der zusammengeklappten Position 7.2 mehr gestreckt als in der aufgeklappten Position 7.1 ist, kann damit eine Kraftübersetzung geschaffen werden, die in der zusammengeklappten Position 7.2 eine verminderte Kraft auf die Gelenkarme 3, 4 ausübt. Durch den spitzen Winkel ergibt sich nämlich eine geringe Übertragung der Federkraft F1 auf die Gelenkarme 3, 4, welche Übertragung mit sich vergrößernden erste Innenwinkel α bis zu einem Maximum zunimmt. Da jedoch auch mit weiterem Aufklappen der Gelenkarme 3, 4 die Federkraft F1 der Feder 14.2 abnimmt, führt dies nach dem Maximum zu einer abnehmenden Kraft auf die Gelenkarme 3, 4. Es bildet sich sohin eine gaußkurvenförmige Kraftbelastung auf die Gelenkarme 3, 4 aus, was die Austragung an Schüttgut in energiesparender Weise sicherstellt.

Eine Verstärkung der gaußkurvenförmige Kraftbelastung wird durch das Hebelarmgestänge 9 erreicht, indem sich der zweite Innenwinkel β zwischen dem jeweiligen Stellarm 9.2, 9.3 und den daran anschließenden Gelenkarm 3, 4 von stumpf in der zusammengeklappten Position 7.2 der Gelenkarme 3, 4 in spitz in der aufgeklappten Position 7.1 der Gelenkarme 3, 4 verändert, was in der Fig. 3 erkannt werden kann.

Ein hoher Grad der Verstärkung wird eingestellt, indem die Stellarme 9.2, 9.3 mit den jeweiligen Gelenkarmen 3, 4 - vom betreffenden Gelenk 5, 6 aus gesehen - in der ersten Hälfte, schwenkbar verbunden sind.

## Patentansprüche

1. Austragungsvorrichtung für kleinstückiges Schüttgut, insbesondere für Hackschnitzel oder Pellets, mit einem um eine Antriebsachse (A) einer Antriebswelle (13) drehbaren Innenteil (2) mit zwei am Innenteil (2) über jeweils ein Gelenk (5, 6) verbundenen Gelenkarmen (3, 4) die um eine Gelenkachse (G) des Gelenks (5, 6) gegen eine Federkraft (F1, F2) in eine zusammengeklappte Position (7.2) verschwenkbar sind, und mit einer zwischen den beiden Gelenkarmen (3, 4) wirksamen mechanischen Zwangskopplung (8) zur Synchronisation der Schwenkbewegung der Gelenkarme (3, 4), wobei die mechanische Zwangskopplung (8) ein Hebelarmgestänge (9) mit einem Übertragungselement (9.1) und mit zwei Stellarmen (9.2, 9.3) aufweist, wobei die Stellarme (9.2, 9.3) sowohl mit dem Übertragungselement (9.1) als auch jeweils beabstandet vom Gelenk (5, 6) mit jeweils einem Gelenkarm (3, 4) beweglich verbunden sind, wobei das Übertragungselement (9.1) einen um die Antriebsachse (A) kippbaren Kipphebel (10) mit zwei Kipphebelseiten (10.1, 10.2) aufweist, wobei die Stellarme (9.2, 9.3) mit der jeweiligen Kipphebelseite (10.1, 10.2) des Kipphebels (10) drehbar und mit den Gelenkarmen (3, 4) schwenkbar verbunden sind,
**dadurch gekennzeichnet, dass** die beiden Kipphebelseiten (10.1, 10.2) zwischen sich eine Lagerbohrung (10.3) am Kipphebel (10) aufweisen, wobei der Kipphebel (10) an der Antriebswelle (13) mit der Antriebsachse (A) zum Drehen des Innenteils (2) über ein Kipplager (K), insbesondere Gleitlager, kippbar gelagert ist, indem ein Lagerteil des Kipplagers (K) an der Lagerbohrung (10.3) des Kipphebels (10) und ein anderes Lagerteil des Kipplagers (K) an der Antriebswelle (13) befestigt sind.

2. Austragungsvorrichtung nach Anspruch 1, **dadurch gekennzeichnet, dass** sich die zwei Kipphebelseiten (10.1, 10.2) von der Antriebsachse (A) weg erstecken.

3. Austragungsvorrichtung nach einem der Ansprüche 1 bis 2, **dadurch gekennzeichnet, dass** die beiden, insbesondere geraden, Kipphebelseiten (10.1, 10.2) des Kipphebels (10) gleich lang ausgebildet sind.

4. Austragungsvorrichtung nach einem der Ansprüche 1 bis 3, **dadurch gekennzeichnet, dass** an den Kipphebel (10) mindestens eine Feder (14.1, 14.2), insbesondere Schraubenzugfeder, angreift, welche die Federkraft (F1, F2) erzeugt, gegen die die Gelenkarme (3, 4) in die zusammengeklappte Position (7.2) verschwenkbar sind.

5. Austragungsvorrichtung nach Anspruch 4, **dadurch gekennzeichnet, dass** die Feder (14.1, 14.2) eine lineare Federkennlinie aufweist.

6. Austragungsvorrichtung nach Anspruch 4 oder 5, **dadurch gekennzeichnet, dass** an beiden Kipphebelseiten (10.1, 10.2) je eine Feder (14.1, 14.2) angreift, deren Federkräfte (F1, F2) entgegengesetzt auf den Kipphebel (10) wirken.

7. Austragungsvorrichtung nach einem der Ansprüche 1 bis 6, **dadurch gekennzeichnet, dass** die Stellarme (9.2, 9.3) gerade verlaufen.

8. Austragungsvorrichtung nach einem der Ansprüche 1 bis 7, **dadurch gekennzeichnet, dass** die Gelenkarme (3, 4) jeweils einen Innenarmteil (3.1, 4.1) und einen an diesen schwenkbar angelenkten Außenarmteil (3.2, 4.2) aufweisen.

9. Austragungsvorrichtung nach Anspruch 8, **dadurch gekennzeichnet, dass** je an einem Stellarm (9.2, 9.3) und an einem Außenarmteil (3.2, 4.2) ein biegeweiches Zugelement (15.1, 15.2), insbesondere Gliederkette, zur Bewegungskopplung des Außenarmteils (3.2, 4.2) mit dem Innenarmteil (3.1, 4.1) angreift.

10. Austragungsvorrichtung nach Anspruch 9, **dadurch gekennzeichnet, dass** das biegeweiche Zugelement (15.1, 15.2) am Innenarmteil (3.1, 4.1) umgelenkt wird, wofür der Innenarmteil (3.1, 4.1) eine Umlenkeinrichtung (17.1, 17.2) aufweist.

11. Austragungsvorrichtung nach einem der Ansprüche 1 bis 10, **dadurch gekennzeichnet, dass** sich der erste Innenwinkel (α) zwischen dem Kipphebel (10) und dem jeweiligen Stellarm (9.2, 9.3) von der zusammengeklappten Position (7.2) der Gelenkarme (3, 4) in die aufgeklappte Position (7.1) der Gelenkarme (3, 4) vergrößert, insbesondere von spitz auf stumpf verändert.

12. Austragungsvorrichtung nach einem der Ansprüche 1 bis 11, **dadurch gekennzeichnet, dass** sich der zweite Innenwinkel (β) zwischen dem jeweiligen Stellarm (9.2, 9.3) und den daran anschließenden Gelenkarm (3, 4) von der zusammengeklappten Position (7.2) der Gelenkarme (3, 4) in die aufgeklappte Position (7.1) der Gelenkarme (3, 4) verringert, insbesondere von stumpf auf spitz verändert.

13. Austragungsvorrichtung nach einem der Ansprüche 1 bis 12, **dadurch gekennzeichnet, dass** die Stellarme (9.2, 9.3) mit den jeweiligen Gelenkarmen (3, 4), vom betreffenden Gelenk (5, 6) aus gesehen, in der ersten Hälfte schwenkbar verbunden sind.

14. Verbrennungseinrichtung mit einer Austragungseinrichtung (1) nach einem der vorangegangenen Ansprüche zu Beschickung der Verbrennungseinrichtung mit Schüttgut als Verbrennungsgut.

## Claims

1. Discharge device for small sized bulk material, more particularly for wood chips or pellets, having an inner part (2) rotatable about a drive axis (A) of a drive shaft (13), having two joint arms (3, 4) which are connected to the inner part (2) via a joint (5, 6) in each case and can be pivoted about a joint axis (G) of the joint (5, 6) against a spring force (F1, F2) into a folded position (7.2), and having a mechanical positive coupling (8) acting between the two joint arms (3, 4) for synchronizing the pivoting movement of the joint arms (3, 4), wherein the mechanical positive coupling (8) has a lever arm linkage (9) with a transmission element (9.1) and with two actuating arms (9.2, 9.3), wherein the actuating arms (9.2, 9.3) are connected both to the transmission element (9. 1) and also in each case at a distance from the joint (5, 6) with in each case one joint arm (3, 4), wherein the transmission element (9.1) has a rocker arm (10) which can be tilted about the drive axis (A) and has two rocker arm sides (10.1, 10. 2), wherein the actuating arms (9.2, 9.3) are rotatably connected to the respective rocker arm side (10.1, 10.2) of the rocker arm (10) and pivotably connected to the joint arms (3, 4), **characterized in that** the two rocker arm sides (10. 1, 10.2) have between them a bearing bore (10.3) on the rocker arm (10), wherein the rocker arm (10) is tiltably mounted on the drive shaft (13) with the drive axis (A) for rotating the inner part (2) via a tilting bearing (K), more particularly a plain bearing, **in that** one bearing part of the tilting bearing (K) is fastened to the bearing bore (10.3) of the rocker arm (10) and another bearing part of the tilting bearing (K) is fastened to the drive shaft (13).

2. Discharge device according to claim 1, **characterized in that** the two rocker arm sides (10.1, 10.2) extend away from the drive shaft (A).

3. Discharge device according to one of claims 1 to 2, **characterized in that** the two, more particularly straight, rocker arm sides (10.1, 10.2) of the rocker arm (10) are of equal length.

4. Discharge device according to one of claims 1 to 3, **characterized in that** at least one spring (14.1, 14.2), more particularly a helical tension spring, acts on the rocker arm (10) and generates the spring force (F1, F2) against which the joint arms (3, 4) can be pivoted into the folded-together position (7.2).

5. Discharge device according to claim 4, **characterized in that** the spring (14.1, 14.2) has a linear spring characteristic.

6. Discharge device according to claim 4 or 5, **characterized in that** a spring (14.1, 14.2) acts on each of the two rocker arm sides (10.1, 10.2), the spring forces (F1, F2) of which act in opposite directions on the rocker arm (10).

7. Discharge device according to one of claims 1 to 6, **characterized in that** the actuating arms (9.2, 9.3) extend in a straight manner.

8. Discharge device according to one of claims 1 to 7, **characterized in that** the joint arms (3, 4) each have an inner arm part (3.1, 4.1) and an outer arm part (3.2, 4.2) pivotably articulated thereto.

9. Discharge device according to claim 8, **characterized in that** a flexible traction element (15.1, 15.2), more particularly a link chain, engages in each case on an actuating arm (9.2, 9.3) and on an outer arm part (3.2, 4.2) for coupling the movement of the outer arm part (3.2, 4.2) to the inner arm part (3.1, 4.1).

10. Discharge device according to claim 9, **characterized in that** the flexible traction element (15.1, 15.2) is deflected at the inner arm part (3.1, 4.1), for which purpose the inner arm part (3.1, 4.1) has a deflection device (17.1, 17.2).

11. Discharge device according to one of claims 1 to 10, **characterized in that** the first internal angle (α) between the rocker arm (10) and the respective actuating arm (9.2, 9.3) increases from the folded position (7.2) of the joint arms (3, 4) into the unfolded position (7.1) of the joint arms (3, 4), more particularly changes from acute to obtuse.

12. Discharge device according to one of claims 1 to 11, **characterized in that** the second internal angle (β) between the respective actuating arm (9.2, 9.3) and the joint arm (3, 4) adjoining it is reduced from the folded-together position (7.2) of the joint arms (3, 4) into the unfolded position (7.1) of the joint arms (3, 4), more particularly changes from obtuse to acute.

13. Discharge device according to one of claims 1 to 12, **characterized in that** the actuating arms (9.2, 9.3) are pivotably connected to the respective joint arms (3, 4) in the first half, as seen from the relevant joint (5, 6).

14. Combustion device having a discharge device (1) according to one of the preceding claims for charging the combustion device with bulk material as combustion material.

## Revendications

1. Dispositif de déversement pour une matière en vrac en petits morceaux, en particulier pour des copeaux de broyage ou des pellets, avec une partie intérieure (2) qui peut être entraînée en rotation autour d'un axe d'entraînement (A) d'un arbre d'entraînement (13), avec deux bras articulés (3, 4) reliés chacun à la partie intérieure (2) par une articulation (5, 6), qui peuvent pivoter autour d'un axe d'articulation (G) de l'articulation (5, 6) contre la force d'un ressort (F1, F2) dans une position repliée (7.2), et avec un couplage mécanique forcé (8) agissant entre les deux bras articulés (3, 4) pour synchroniser le mouvement pivotant des bras articulés (3, 4), le couplage mécanique forcé (8) comportant une tringle de bras de levier (9) avec un élément de transmission (9.1) et avec deux bras de placement (9.2, 9.3), lesquels bras de placement (9.2, 9.3) sont reliés de façon mobile aussi bien à l'élément de transmission (9.1) que chacun à un bras articulé (3, 4) à distance de l'articulation (5, 6), l'élément de transmission (9.1) comportant un levier basculant (10) capable de basculement autour de l'axe d'entraînement (A) et muni de deux côtés de levier basculant (10.1, 10.2), les bras de placement (9.2, 9.3) étant reliés avec le côté de levier basculant (10.1, 10.2) correspondant du levier basculant (10) avec possibilité de rotation et avec les bras articulés (3, 4) de façon pivotante, **caractérisé en ce que** les deux côtés de levier pivotant (10.1, 10.2) comportent entre eux un alésage de palier (10.3) sur le levier basculant (10), lequel levier basculant (10) est supporté avec possibilité de basculement sur l'arbre d'entraînement (13) avec l'axe d'entraînement (A) pour faire tourner la partie intérieure (2) à l'aide d'un palier basculant (K), en particulier un palier lisse, par le fait qu'une partie de palier du palier basculant (K) est fixée sur l'alésage de palier (10.3) du levier basculant (10) et une autre partie de palier du palier basculant (K) sur l'arbre d'entraînement (13).

2. Dispositif de déversement selon la revendication 1, **caractérisé en ce que** les deux côtés de levier basculant (10.1, 10.2) s'étendent à l'opposé de l'axe d'entraînement (A).

3. Dispositif de déversement selon l'une des revendications 1 à 2, **caractérisé en ce que** les deux côtés de levier basculant (10.1, 10.2) du levier basculant (10), en particulier rectilignes, ont la même longueur.

4. Dispositif de déversement selon l'une des revendications 1 à 3, **caractérisé en ce qu'**au moins un ressort (14.1, 14.2), en particulier un ressort hélicoïdal de traction, se met en prise sur le levier basculant (10) et produit la force de ressort (F1, F2) contre laquelle les bras articulés (3, 4) peuvent être pivotés dans la position repliée (7.2).

5. Dispositif de déversement selon la revendication 4, **caractérisé en ce que** le ressort (14.1, 14.2) présente une caractéristique de ressort linéaire.

6. Dispositif de déversement selon la revendication 4 ou 5, **caractérisé en ce qu'**un ressort (14.1, 14.2) se met en prise sur chacun des deux côtés de levier basculant (10.1, 10.2) et les forces de ressort (F1, F2) agissent dans des directions opposées sur le levier basculant (10).

7. Dispositif de déversement selon l'une des revendications 1 à 6, **caractérisé en ce que** les bras de placement (9.2, 9.3) ont une forme rectiligne.

8. Dispositif de déversement selon l'une des revendications 1 à 7, **caractérisé en ce que** les bras articulés (3, 4) présentent chacun une partie de bras intérieure (3.1, 4.1) et une partie de bras extérieure (3.2, 4.2) articulée de façon pivotante sur celle-ci.

9. Dispositif de déversement selon la revendication 8, **caractérisé en ce que** chaque bras de placement (9.2, 9.3) et partie de bras extérieure (3.2, 4.2) porte un élément de traction flexible (15.1, 15.2), en particulier un maillon de chaîne, pour le couplage du mouvement de la partie de bras extérieure (3.2, 4.2) avec la partie de bras intérieure (3.1, 4.1).

10. Dispositif de déversement selon la revendication 9, **caractérisé en ce que** l'élément de traction flexible (15.1, 15.2) est dévié sur la partie de bras intérieure (3.1, 4.1), ce pour quoi la partie de bras intérieure (3.1, 4.1) présente un dispositif de déviation (17.1, 17.2).

11. Dispositif de déversement selon l'une des revendications 1 à 10, **caractérisé en ce que** le premier angle intérieur (α) entre le levier basculant (10) et le bras de placement (9.2, 9.3) correspondant augmente de la position repliée (7.2) des bras articulés (3, 4) à la position dépliée (7.1) des bras articulés (3, 4), en particulier passe d'aigu à obtus.

12. Dispositif de déversement selon l'une des revendications 1 à 11, **caractérisé en ce que** le deuxième angle intérieur (β) entre chaque bras de placement (9.2, 9.3) et le bras articulé (3, 4) qui lui fait suite change de la position repliée (7.2) des bras articulés (3, 4) à la position dépliée (7.1) des bras articulés (3, 4), en particulier change d'obtus à aigu.

13. Dispositif de déversement selon l'une des revendications 1 à 12, **caractérisé en ce que** les bras de placement (9.2, 9.3) sont reliés avec les bras articulés (3, 4), vus depuis l'articulation (5, 6) correspondante, de façon à pouvoir pivoter dans leur première moitié.

14. Installation de combustion avec un dispositif de déversement (1) selon l'une des revendications précédentes, destiné à charger l'installation de combustion avec de la matière en vrac servant de combustible.
